# FASCICULE DE BREVET EUROPEEN

(11) **EP 4 075 647 B1**
(45) Date de publication et mention de la délivrance du brevet: **18.02.2026**
(21) Numéro de dépôt: 22167016.9
(22) Date de dépôt: 06.04.2022
(51) Int. Cl.: H02K 35/06, H02K 7/18

(54) **DISPOSITIF ÉLECTROMAGNÉTIQUE DE CONVERSION D'UNE ÉNERGIE MÉCANIQUE EN UNE ÉNERGIE ÉLECTRIQUE**
ELEKTROMAGNETISCHE VORRICHTUNG ZUR UMWANDLUNG VON MECHANISCHER ENERGIE IN ELEKTRISCHE ENERGIE
ELECTROMAGNETIC DEVICE FOR CONVERTING MECHANICAL ENERGY INTO ELECTRICAL ENERGY

(30) Priorité: 15.04.2021 FR 2103921
(43) Date de publication de la demande: 19.10.2022
(73) Titulaire: Commissariat à l'Energie Atomique et aux Energies Alternatives, 75015 Paris (FR)
(72) Inventeur: DESPESSE, Ghislain, 38054 GRENOBLE (FR); BOISSEAU, Sébastien, 38054 GRENOBLE (FR)
(74) Mandataire: INNOV-GROUP

(56) Documents cités:
- CN-B- 102 938 605
- JP-A- 2020 078 237
- US-A- 3 394 275
- US-A1- 2015 288 269
- US-A1- 2018 376 247
- US-A1- 2021 351 339

## Description

### Domaine technique de l'invention

La présente invention se rapporte à un dispositif électromagnétique de conversion d'une énergie mécanique en une énergie électrique.

### Etat de la technique

La conversion d'énergie mécanique en énergie électrique est un sujet connu depuis de nombreuses années. On distingue différents types de dispositifs. A titre d'exemple, certains utilisent l'effet piézoélectrique, d'autres utilisent un principe électromagnétique.

Actuellement, de tels dispositifs sont notamment employés dans le domaine des interrupteurs résidentiels ou boutons-poussoirs industriels, dits sans fil et sans pile. En appuyant sur le bouton, l'énergie mécanique exercée est convertie en une énergie électrique capable d'alimenter un émetteur radio. L'émetteur radio envoie un message à un récepteur destiné à commander une application (lampe, appareil, machine...).

De nombreuses demandes de brevets ont déjà été déposées pour des dispositifs fonctionnant sur le principe électromagnétique. On peut notamment citer les demandes de brevets WO2007/060072A1, WO2009/109449A1, EP1611662A1.

Ces dispositifs connus fonctionnent sur le principe de base décrit initialement dans la demande de brevet GB1312927.

Ce principe de base consiste à créer une inversion de flux magnétique à travers la carcasse d'une bobine enroulée autour d'un circuit magnétique, en actionnant un aimant en pivotement. Selon la position prise par l'aimant permanent, le flux magnétique circule dans un sens puis dans l'autre. La variation de flux magnétique vue par la bobine permet de créer, par induction, une tension aux bornes de la bobine. Cette tension peut ensuite être utilisée pour alimenter l'émetteur radio. Les dispositifs sont monostables ou bistables et sont par exemple adaptés pour être intégrés dans le mécanisme d'un interrupteur.

Pour obtenir une variation de flux importante à travers la bobine et maximiser l'énergie électrique obtenue, le mouvement mécanique créé doit être rapide et d'amplitude élevée. Ces solutions antérieures ne sont donc pas forcément adaptées pour être employées dans des solutions dont l'encombrement est limité, et pour lesquelles il est nécessaire de prévoir un mouvement mécanique d'amplitude faible.

Pour des dispositifs nécessitant une amplitude d'actionnement faible, on peut utiliser un mouvement mécanique de type vibratoire.

Le principe de récupération d'énergie électrique à partir d'un mouvement mécanique de type vibratoire est décrit dans le brevet US8080906B2, ainsi que dans les demandes de brevets WO2005/062443A1 et WO2009/003799A1.

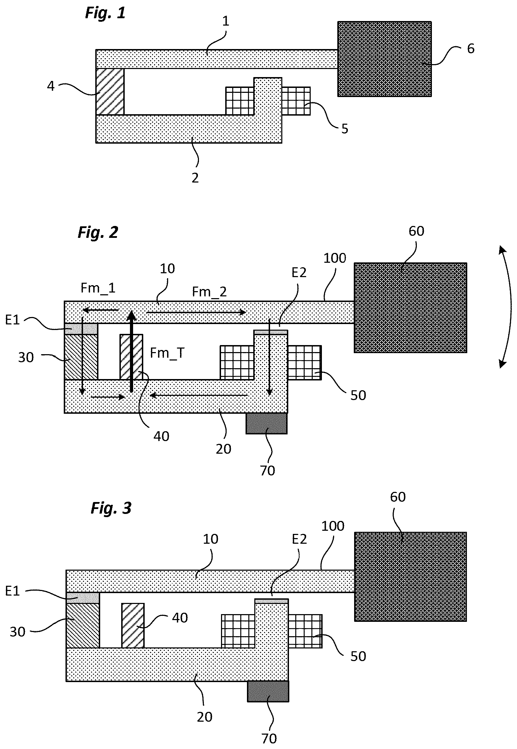

La figure 1 montre de manière schématique un dispositif de conversion selon l'état de la technique, qui permet de générer une énergie électrique à partir d'une énergie mécanique de type vibratoire. Ce dispositif comporte un circuit magnétique composé de plusieurs branches dans lequel est inséré un aimant permanent capable de créer un flux magnétique dans le circuit. Le circuit magnétique traverse la carcasse d'une bobine électromagnétique. Le circuit magnétique comporte un entrefer variable créé par le mouvement en flexion d'une poutre insérée en partie dans le circuit magnétique. La poutre est fixée par une extrémité, par laquelle elle est actionnable dans son mouvement de flexion, et porte à son extrémité libre une masse permettant de favoriser son mouvement vibratoire.

Cette solution n'est pas satisfaisante car elle ne permet pas d'obtenir une variation de flux suffisamment importante à travers la bobine. En effet, l'aimant permanent inséré dans le circuit magnétique se comporte comme un entrefer fixe qui vient s'additionner à l'entrefer variable. En pratique, on constate ainsi que, quelle que soit la position de la poutre, et donc la valeur de l'entrefer variable, l'essentiel du flux magnétique de l'aimant passe toujours par l'entrefer variable. La bobine n'observe ainsi pas ou peu de variation de flux magnétique, ce qui ne permet pas d'obtenir une tension suffisante en sortie.

La demande de brevet JP2020078237 décrit un générateur d'énergie électrique utilisant une poutre mise en vibration.

Le but de l'invention est donc de proposer un dispositif de conversion qui soit capable de maximiser l'énergie électrique obtenue, à partir d'une énergie mécanique vibratoire, c'est-à-dire avec une amplitude de mouvement faible, par exemple inférieure à 1mm et/ou inférieure à cinq fois la longueur de l'aimant dans le sens de sa polarisation.

### Exposé de l'invention

Ce but est atteint par un dispositif électromagnétique de conversion d'une énergie mécanique d'entrée en une énergie électrique de sortie, comprenant :
- Un élément mobile apte à se déplacer dans un mouvement mécanique vibratoire,
- Une source de vibration configurée pour actionner l'élément mobile dans son mouvement mécanique vibratoire,
- Une bobine,
- Un circuit magnétique traversant ladite bobine, ladite bobine étant configurée pour générer l'énergie électrique de sortie lorsque ledit élément mobile est actionné dans son mouvement mécanique vibratoire,
- Un aimant permanent agencé dans le circuit magnétique et apte à générer un flux magnétique dit total dans le circuit magnétique,
- Le circuit magnétique comportant un premier entrefer et un deuxième entrefer,
- Ledit premier entrefer étant sensiblement fixe et ledit deuxième entrefer étant variable en fonction de la position prise par l'élément mobile dans son mouvement mécanique vibratoire,
- L'aimant permanent étant agencé dans le circuit magnétique pour que le flux magnétique total se sépare en un premier flux magnétique à travers une première partie du circuit magnétique comprenant l'entrefer fixe et en un deuxième flux magnétique à travers une deuxième partie du circuit magnétique comprenant l'entrefer variable,
- La bobine étant traversée par une seule partie du circuit magnétique, choisie parmi la première partie du circuit magnétique et la deuxième partie du circuit magnétique,
- Le rapport entre le premier flux magnétique et le deuxième flux magnétique variant en fonction de la position prise par l'élément mobile.

Selon une particularité, l'élément mobile comporte au moins une première branche intégrée au circuit magnétique.

Selon une autre particularité, le circuit magnétique comporte une deuxième branche et le dispositif comporte une liaison joignant la première branche à la deuxième branche.

Selon une autre particularité, la liaison est insérée dans le circuit magnétique et le premier entrefer est intégré dans ladite liaison.

Selon une autre particularité, le premier entrefer est agencé dans une branche de jonction joignant ladite première branche à ladite deuxième branche, agencée en parallèle de ladite liaison.

Selon une réalisation particulière, la liaison est une liaison ressort apte à autoriser le mouvement mécanique vibratoire de l'élément mobile.

Selon une autre réalisation particulière, ladite liaison est une liaison rigide et la première branche et/ou la deuxième branche est configurée pour fléchir en vue d'autoriser le mouvement mécanique vibratoire.

Selon une particularité, ladite première branche se présente sous la forme d'une poutre fixée à ladite liaison par une première partie d'extrémité et qui comporte une deuxième partie d'extrémité opposée qui est libre.

Selon une autre réalisation particulière, le circuit magnétique comporte un troisième entrefer qui est variable et ledit élément mobile est agencé pour osciller entre ledit deuxième entrefer et ledit troisième entrefer.

Selon une autre réalisation particulière, ladite première branche est maintenue en appui par une première partie d'extrémité contre une partie en matériau non ferromagnétique formant le premier entrefer, par au moins un ressort monté entre la première branche et la deuxième branche.

Selon une autre réalisation particulière, la première branche est formée d'une membrane déformable, et la liaison comporte une partie annulaire formant une liaison avec la deuxième branche.

Selon une particularité, le dispositif comporte une masse sismique portée par l'élément mobile.

Selon une réalisation particulière, la masse sismique est réalisée dans un matériau ferromagnétique et le deuxième entrefer est agencé entre ladite masse sismique et la deuxième branche du circuit magnétique.

Selon une particularité, la source de vibration comporte un support vibrant auquel ladite deuxième branche est reliée par un point de fixation.

Selon une autre particularité, le point de fixation est positionné suivant un axe passant par le centre de gravité de la masse sismique lorsque l'élément mobile est au repos.

Selon une réalisation particulière, la bobine est positionnée autour de la première branche du circuit magnétique.

Selon une autre réalisation particulière, la bobine est positionnée autour de la deuxième branche du circuit magnétique.

### Brève description des figures

D'autres caractéristiques et avantages vont apparaître dans la description détaillée qui suit faite en regard des dessins annexés dans lesquels :
- La figure 1 représente de manière schématique un dispositif de conversion d'une énergie mécanique en une énergie électrique, selon l'état de la technique ;
- La figure 2 illustre le principe de fonctionnement du dispositif de conversion conforme à l'invention ;
- Les figures 3 à 12 représentent différentes variantes de réalisation du dispositif de conversion de l'invention ;

### Description détaillée d'au moins un mode de réalisation

Le dispositif de conversion de l'invention est destiné à convertir une énergie mécanique en une énergie électrique. L'énergie mécanique d'entrée est fournie sous une forme vibratoire. L'énergie électrique de sortie est générée, à partir de l'énergie mécanique d'entrée, à l'aide de moyens électromagnétiques.

Le dispositif est destiné à exploiter des vibrations de relativement faibles amplitudes, typiquement inférieures à 1 m/s² à 50Hz, c'est-à-dire souvent inférieures à 10µm d'amplitude, pouvant aller jusqu'à 1mm maximum si la fréquence de vibration de la source de vibration correspond à la fréquence de résonance.

La source de vibration peut être un support vibrant 70 auquel est fixé le dispositif. Ce support vibrant peut subir une force mécanique externe entraînant sa vibration.

Le dispositif comporte principalement :
- Un circuit magnétique ;
- Une bobine électromagnétique 50 comprenant un support et un enroulement réalisé autour de son support, ledit enroulement étant positionné autour du circuit magnétique ;
- Un aimant permanent 40 agencé pour générer un flux magnétique à travers le circuit magnétique ;
- Un élément mobile 100 actionnable dans un mouvement mécanique de type vibratoire. L'élément mobile 100 comporte au moins une partie réalisée en matériau ferromagnétique, insérée dans le circuit magnétique. Un flux magnétique est donc susceptible de circuler à travers cette partie de l'élément mobile ;
- Une source de vibration permettant de conférer le mouvement mécanique vibratoire à l'élément mobile 100 ;

Le circuit magnétique comporte plusieurs branches réalisées en matériau ferromagnétique qui sont assemblées entre elles et qui définissent entre elles un chemin suivi par le flux magnétique, ledit chemin comportant au moins un premier entrefer E1 et un deuxième entrefer E2, le deuxième entrefer E2 étant distinct du premier entrefer E1.

Par branche du circuit magnétique, on entend un élément de toute forme dont la section est suffisante pour assurer la circulation du flux magnétique. Une branche peut présenter une forme allongée, droite ou coudée. On verra que d'autres formes peuvent également être prévues.

Le premier entrefer E1 est toujours fixe, c'est-à-dire que la distance non nulle qui sépare les deux parties du circuit magnétique formant ce premier entrefer E1 reste toujours sensiblement identique, quelle que soit la position de l'élément mobile 100.

Le deuxième entrefer E2 est variable, c'est-à-dire que la distance qui sépare les deux parties du circuit magnétique formant ce deuxième entrefer varie dans le temps, en fonction de la position prise par l'élément mobile 100.

En référence à la figure 2, contrairement à la solution de l'état de la technique représentée sur la figure 1, dans l'invention, l'aimant permanent 40 est agencé par rapport au circuit magnétique de manière à générer un premier flux magnétique Fm_1 dans une première partie du circuit magnétique comprenant le premier entrefer E1 fixe et un deuxième flux magnétique Fm_2 dans une deuxième partie du circuit magnétique comprenant le deuxième entrefer E2 variable. Autrement dit, l'aimant permanent 40 génère un flux magnétique total Fm_T qui se sépare entre le premier flux magnétique Fm_1 et le deuxième flux magnétique Fm_2, le rapport entre le premier flux magnétique et le deuxième flux magnétique étant ensuite dépendant de la valeur de l'entrefer variable, et donc de la position prise par l'élément mobile 100.

La bobine 50 est positionnée dans la partie du circuit magnétique susceptible de voir la variation de flux magnétique la plus importante. Elle peut être traversée par la première partie du circuit magnétique ou par la deuxième partie du circuit magnétique définie ci-dessus.

On verra ci-dessous que dans certaines variantes de réalisation, certaines portions du circuit magnétique peuvent être communes à sa première partie et à sa deuxième partie. Les deux parties sont ainsi réparties dans les différentes branches qui composent le circuit magnétique.

Le circuit magnétique comporte principalement une première branche 10, une deuxième branche 20 et une liaison 30 entre la première branche et la deuxième branche.

L'élément mobile 100 est par exemple intégré à la première branche 10.

L'élément mobile 100 peut être formé d'une poutre déformable.

Dans ce dernier cas, il faut noter que pour fabriquer un résonateur qui fonctionne à basse fréquence (<150Hz), il est utile de disposer d'une poutre ayant un rapport longueur/épaisseur relativement élevé (par exemple supérieur à 20). Pour des raisons de fabrication et de robustesse, l'épaisseur de la poutre ne peut cependant pas être trop faible, la longueur de la poutre doit être relativement élevée par rapport aux autres dimensions du dispositif.

La poutre peut être fixée par une première partie d'extrémité et libre à une deuxième partie d'extrémité.

La deuxième partie d'extrémité de la poutre peut porter une masse sismique 60 permettant de favoriser son mouvement vibratoire et d'augmenter la puissance récupérable.

Dans sa première partie d'extrémité, la poutre peut être fixée à une deuxième branche du circuit magnétique via la liaison 30. La liaison 30 peut présenter un effet ressort, lui permettant d'autoriser le mouvement vibratoire de l'élément mobile. En variante, la liaison 30 peut également être rigide, l'effet ressort permettant le mouvement vibratoire étant alors assuré par au moins l'une des deux branches 10, 20 du dispositif, qui présente des propriétés mécaniques suffisantes pour se déformer en flexion.

La liaison 30 peut être intégrée au circuit magnétique et utilisée pour faire passer le premier flux magnétique Fm_1 ou le deuxième flux magnétique Fm_2. Mais la liaison 30 peut également être employée pour ne remplir qu'une fonction mécanique de type ressort, permettant la flexion de la poutre lors de son mouvement vibratoire.

Dans sa première partie d'extrémité, la poutre peut venir en appui contre un plot solidaire de la deuxième branche du circuit magnétique. La liaison 30 est alors remplacée par un premier ressort 90 monté entre l'élément mobile et la deuxième branche. Un deuxième ressort 91 peut être monté et configuré pour limiter le mouvement de la masse sismique 60 par rapport à la deuxième branche 20.

Le premier entrefer peut être inséré dans le circuit magnétique, dans la liaison entre la première branche et la deuxième branche.

Le premier entrefer E1 peut être inséré entre la poutre et ledit plot.

Le premier entrefer E1 peut être formé d'une couche ou d'une pièce en matériau non-ferromagnétique.

La deuxième branche 20 présente une extrémité libre par rapport à laquelle l'élément mobile 100 crée le deuxième entrefer E2.

Le deuxième entrefer E2 peut être formé entre la masse sismique 60 porté par la poutre et l'extrémité libre de la deuxième branche 20.

Le deuxième entrefer E2 peut être dédoublé, défini par deux espaces distincts entre l'élément mobile 100 et l'extrémité libre de la deuxième branche 20.

Le deuxième entrefer E2 varie avec le mouvement de l'élément mobile par rapport à la deuxième branche 20. Une butée peut être disposée pour limiter la course du mouvement mécanique de l'élément mobile 100, sans pour autant que le deuxième entrefer E2 ne devienne nul. Cela peut être utile si la force électromagnétique devient trop importante à très faible entrefer et risque d'induire un collage électromagnétique, typiquement, lorsque cette force électromagnétique devient supérieure à la force de rappel élastique exercée sur l'élément mobile 100.

De manière non limitative, le premier entrefer E1 et le deuxième entrefer E2 peuvent être choisis quasi-identiques lorsque l'élément mobile 100 est au repos.

L'aimant permanent 40 peut être fixé à la première branche 10 et/ou à la deuxième branche 20 du circuit magnétique. Il est orienté de manière à générer le flux magnétique total Fm_T dans le circuit magnétique, ce flux magnétique total Fm_T se divisant entre le premier flux magnétique Fm_1 qui traverse le premier entrefer E1 et le deuxième flux magnétique Fm_2 qui traverse le deuxième entrefer E2. L'aimant permanent 40 peut bien entendu être orienté magnétiquement dans un sens ou dans l'autre entre les deux branches du circuit magnétique, afin de polariser le champ magnétique généré dans le circuit magnétique dans le sens souhaité.

La source de vibration peut être un support vibrant 70 auquel est fixé le dispositif, afin de générer et entretenir le mouvement vibratoire de l'élément mobile 100.

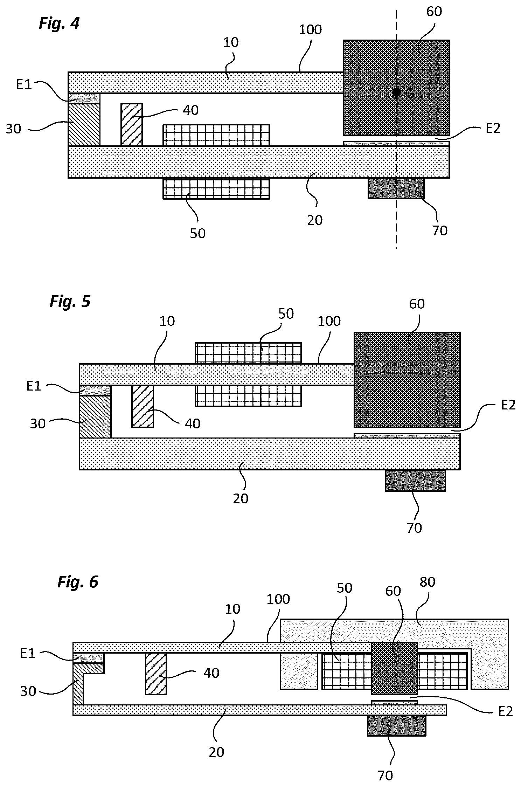

De manière non limitative, la deuxième branche 20 peut notamment être fixée sur le support vibrant 70. Selon la configuration du dispositif, lorsque cela est possible, le point de fixation du dispositif au support vibrant 70 peut être idéalement aligné sur le centre gravité de la masse sismique dans la direction de la vibration (voir figure 4 avec le centre de gravité G de la masse sismique 60), pour limiter les couples de torsion au niveau de l'ancrage lorsque la masse sismique est en mouvement.

Toute masse additionnelle peut être ajoutée à l'élément mobile 100 pour favoriser son mouvement vibratoire et augmenter l'énergie mécanique convertible.

A noter qu'une augmentation de la masse sismique (masse m) située à l'extrémité d'une poutre n'engendre pas forcément un déplacement relatif plus important. En effet, si on augmente cette masse, on va raidir la poutre de sorte que la fréquence de résonance (Fr) reste proche de la fréquence de la source de vibration Fr=1/(2π)*√(k/m). L'amplitude du mouvement relatif entre le support et la masse sismique restera sensiblement égale à l'amplitude de la vibration multipliée par le facteur de qualité Q. La puissance récupérable sera proportionnelle à Q*m. Donc plus la masse est élevée, plus on peut récupérer d'énergie à amplitude de vibration d'entrée constante.

La bobine 50 peut être traversée par la première branche 10 du circuit magnétique ou par la deuxième branche 20 du circuit magnétique.

Le dispositif peut présenter une structure symétrique, par rapport à un plan vertical ou de révolution autour d'un axe (A).

Dans une version à symétrie de révolution, l'élément mobile 100 peut se présenter sous la forme d'une membrane apte à se déformer lors de son mouvement mécanique vibratoire.

Les deux branches 10, 20 peuvent également être réalisées sous la forme de plaques, assemblées entre elles.

On peut noter que l'aimant permanent 40 ne comble pas forcément complètement l'espace entre les deux branches 10, 20 du circuit magnétique. En pratique, comme la perméabilité de l'aimant permanent 40 est proche de celle du vide, il n'est pas nécessaire d'aller jusqu'au contact mécanique sur les deux branches pour induire le champ magnétique dans le circuit magnétique, du moins tant que cet espace ne devient pas significatif devant la longueur de l'aimant. Cette particularité permet d'utiliser des aimants dont les caractéristiques dimensionnelles ne sont pas primordiales, réduisant ainsi leur coût. Par ailleurs, l'espace entre l'extrémité libre de l'aimant permanent et la branche située en vis-à-vis (première branche ou deuxième branche selon les cas) peut être utilisé pour régler, sans nécessité d'une grande précision dimensionnelle, le niveau d'induction dans le circuit magnétique par rapport à l'induction intrinsèque de l'aimant permanent.

Il faut noter que certaines des caractéristiques énumérées ci-dessus peuvent être combinées entre elles. Les principes généraux ci-dessous sont notamment à prendre en compte dans les différentes configurations possibles :
- La flexion permettant d'autoriser le mouvement vibratoire peut se faire au niveau de la première branche 10, de la deuxième branche 20 et/ou de la liaison 30.
- La liaison 30 peut être une simple continuité de la deuxième branche 20 ou de la première branche 10, le premier entrefer E1 étant alors positionné selon le cas entre la liaison 30 et la première branche 10 ou entre la liaison 30 et la deuxième branche 20.
- Les entrefer E1 et E2 sont avantageusement choisis petits devant la longueur de l'aimant permanent 40 (la longueur de l'aimant dans sa direction de polarisation peut être 3 à 10 fois plus élevée que celle de chaque entrefer).

Partant de ces différentes caractéristiques, différentes variantes de réalisation du dispositif sont décrites ci-dessous en liaison avec les figures 3 à 12.

Dans la description faite ci-dessous de chacune des variantes, seules les particularités marquantes sont mises en avant. Il faut comprendre que divers autres arrangements peuvent être prévus à chaque fois, par exemple au niveau de la position de la bobine 50, de l'aimant permanent 40, de la forme de chaque branche 10, 20 du circuit, de la fonction de la liaison 30, le principe de fonctionnement restant toujours conforme à celui décrit ci-dessus en liaison avec la figure 2.

### Figure 3

Sur cette figure 3, il s'agit de l'architecture la plus simple du dispositif. Elle correspond à celle de la figure 2 déjà évoquée ci-dessus.

Elle comporte la première branche 10 et la deuxième branche 20 formées de deux poutres en parallèle. La liaison 30 relie une extrémité de chaque branche et est configurée pour réaliser l'effet ressort. La deuxième branche est coudée à son extrémité libre. L'élément mobile 100 est intégré à la première branche 10. L'élément mobile 100 porte à son extrémité libre une masse sismique 60 destinée à augmenter la puissance mécanique d'entrée.

Le premier entrefer E1 est formé d'une partie en matériau non ferromagnétique insérée dans la liaison entre la première branche 10 et la deuxième branche 20.

Le deuxième entrefer E2 est inséré entre l'extrémité libre de la deuxième branche 20 et la première branche 10, intégrant l'élément mobile.

L'aimant permanent 40 est fixé à la deuxième branche 20 et orienté pour générer un flux magnétique total, se divisant en un premier flux magnétique Fm_1 à travers le premier entrefer E1 et un deuxième flux magnétique Fm_2 à travers le deuxième entrefer E2.

La bobine 50 est positionnée autour de la deuxième branche 20.

En variante de cette configuration, comme décrit ci-dessus, la liaison 30 peut être choisie rigide, la première branche 10 étant alors déformable en flexion et assurant la fonction ressort. Dans cette configuration, la liaison 30 est alors incluse dans la deuxième branche 20 et ne fait que prolonger celle-ci. Il faut noter que la déformabilité en flexion peut aussi être attribuée à la deuxième branche 20.

Dans cette variante de réalisation, la deuxième branche 20 est ancrée sur le support vibrant 70 permettant de générer le mouvement vibratoire de l'élément mobile 100.

### Figure 4

Cette variante de réalisation de la figure 4 diffère de celle de la figure 3 en ce que l'élément mobile 100 est intégré au circuit magnétique et est donc confondu avec la première branche 10. La masse sismique 60 est réalisée dans un matériau ferromagnétique, celle-ci formant le deuxième entrefer E2 avec la deuxième branche 20. Le deuxième flux magnétique Fm_2 est donc capable de traverser la totalité de l'élément mobile 100 ainsi que la masse sismique 60 pour circuler à travers le deuxième entrefer E2.

### Figure 5

Cette variante de réalisation de la figure 5 diffère de celle de la figure 4 en ce que la bobine 50 est positionnée autour de la première branche 10 et l'aimant permanent 40 est fixé à la première branche. Cet arrangement permet d'augmenter la masse de l'élément mobile 100 et donc d'augmenter l'énergie mécanique disponible. Ce principe peut être appliqué de manière générale dans les autres variantes de réalisation.

### Figure 6

Dans cette variante de la figure 6, pour transmettre le mouvement du support vibrant 70 jusqu'à l'élément mobile, la deuxième branche 20 et la liaison 30 sont réalisées sous la forme de parties flexibles.

La bobine 50 est portée par la première branche 10 et une masse additionnelle 80 est ajoutée à la masse sismique 60.

### Figure 7

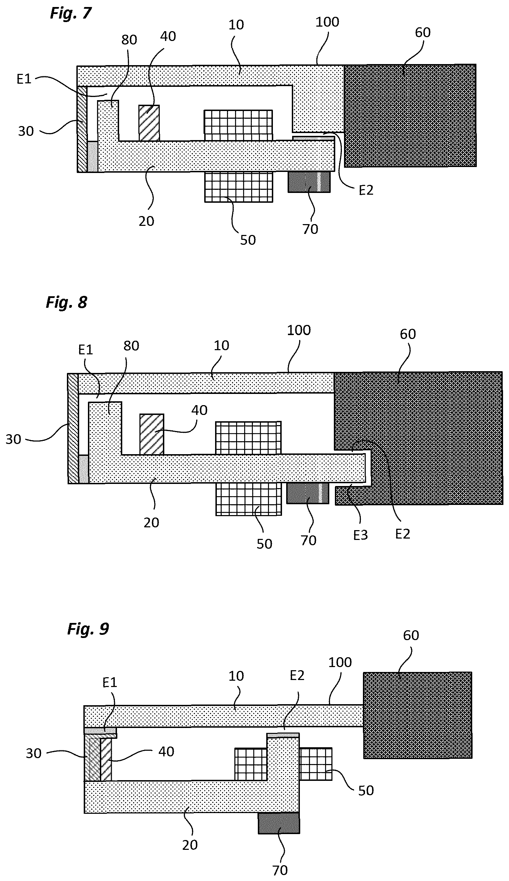

Dans cette variante de la figure 7, le premier entrefer E1 est séparé de la liaison mécanique entre la première branche 10 et la deuxième branche 20. La liaison n'est employée que pour relier mécaniquement les deux branches et elle n'est pas en matériau ferromagnétique ou sinon présente une section insuffisante pour laisser passer le flux magnétique. Le premier entrefer E1 est agencé entre la première branche 10 et une branche supplémentaire qui est fixée à la deuxième branche 20. Le premier entrefer E1 peut également être agencé entre la deuxième branche 20 et la branche supplémentaire qui est fixée à la première branche 10. Cette branche supplémentaire est dimensionnée pour faire passer le flux magnétique entre les deux branches 10, 20, via le premier entrefer E1.

### Figure 8

Dans cette variante de la figure 8, le deuxième entrefer E2 est dédoublé. On dispose ainsi de deux entrefers E2, E3 variables créés entre la première branche 10 et la deuxième branche 20. Lorsque l'un des deux entrefers est maximal, l'autre est minimal et inversement.

Cette solution permet de doubler la fréquence de la variation de la réluctance par rapport à la fréquence de la vibration.

### Figure 9

Dans cette variante de la figure 9, la liaison 30 entre les deux branches 10, 20 ainsi que le premier entrefer E1 sont dédoublées. Cette solution permet de venir disposer l'aimant permanent 40 dans l'espace dégagé entre les deux parties de la liaison qui sont ainsi formées.

### Figure 10

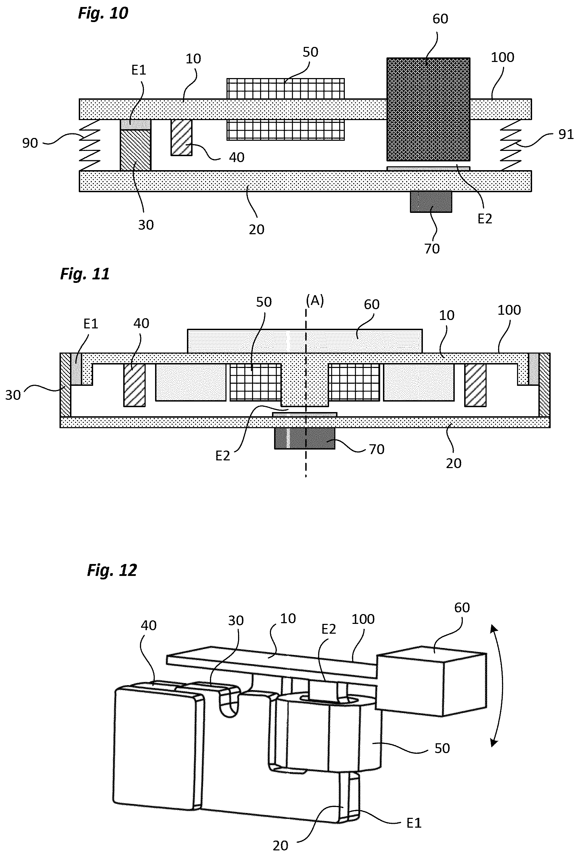

Dans cette variante de la figure 10, l'élément mobile 100 est maintenu en appui contre la liaison 30 par deux ressorts 90, 91 montés chacun entre la deuxième branche 20 et la première branche 10. Le premier entrefer E1 est réalisé par une couche en matériau non ferromagnétique insérée entre l'élément mobile 100 et la liaison 30 au niveau de la zone d'appui.

A noter que pour les figures 1 à 10, il est possible d'avoir plusieurs fois la chaine mécanique composée de la première branche 10, du premier entrefer E1, de la liaison 30, et de la deuxième branche 20 rattachées à une même masse sismique 60. Par exemple, pour assurer une symétrie droite-gauche. Ou encore, pour bloquer tous les mouvements de rotation de la masse sismique 60, par exemple, en utilisant trois bras placés à 120° dans le plan. Ces symétries permettent, par exemple, de limiter les moments de rotation de la masse sismique 60, ou encore, permettent d'aligner, dans l'axe du déplacement, le centre de gravité de la masse globale du dispositif avec le centre de gravité de la partie de la masse qui est en mouvement relatif. Cela permet de limiter les moments de rotation sur le support de vibration quelle que soit l'amplitude du mouvement relatif, à partir du moment où le support vibrant 70 est lui-même fixé dans l'alignement des centres de gravité, dans la direction du mouvement.

### Figure 11

Selon la figure 11, le dispositif peut se présenter sous une forme symétrique de révolution. Le dispositif se présente ainsi sous la forme d'un cylindre réalisé à l'aide de deux disques (premier disque formant la branche 10 et deuxième disque formant la branche 20) parallèles imbriquées. Un espace annulaire est ménagé entre les deux disques pour former le premier entrefer E1. Un premier disque 10 porte par exemple un plot central sur lequel est inséré la bobine, ce plot central s'étendant axialement en direction du deuxième disque, le deuxième entrefer E2 étant ménagé entre ledit plot et le deuxième disque. L'aimant permanent 40 réalisé sous une forme annulaire, est fixé sur l'un des deux disques, agencé de manière concentrique au plot central. Le deuxième disque peut être ancré sur un support vibrant 70. Le premier disque peut porter une masse 60 et être réalisé sous la forme d'une membrane capable de se déformer lors de son mouvement vibratoire. En variante, le deuxième disque 20 peut également se comporter comme une membrane déformable.

Dans ces deux variantes, la membrane peut être pleine, mais aussi éventuellement structurée pour s'assouplir, par exemple avec un motif en spirale, ou encore avec une ondulation. Pour l'aimant permanent 40, il peut prendre la forme d'un anneau, mais aussi être composé d'aimants discrets répartis régulièrement sur le contour.

### Figure 12

Dans cette variante de la figure 12, La deuxième branche 20 et la liaison 30 sont réalisées chacune sous la forme d'une plaque ferromagnétique. Les deux plaques sont assemblées de part et d'autre d'une couche réalisée en matériau non ferromagnétique formant le premier entrefer E1 fixe.

Les deux plaques peuvent disposer chacune d'une extension. La première branche 10 intègre au moins en partie l'élément mobile 100. L'élément mobile 100 est positionné pour s'étendre entre les deux extensions, de manière à définir le deuxième entrefer E2. L'aimant permanent 40 est par exemple pris entre deux éléments ferromagnétiques, fixés chacun respectivement à la première plaque et à la deuxième plaque pour créer le circuit magnétique. L'élément mobile 100 peut être monté sur un support (non représenté) et une solution de ressort peut être employée pour autoriser le mouvement relatif de l'élément mobile 100 par rapport au support vibrant 70.

Ci-dessous, un exemple de dimensionnement permettant de mieux comprendre le principe de l'invention.
- Au repos, les deux entrefers E1, E2 sont identiques : le flux magnétique total Fm_T de l'aimant permanent se partage ainsi sensiblement équitablement entre la première partie et la deuxième partie du circuit magnétique, respectivement en passant via le premier entrefer E1 et via le deuxième entrefer E2. On considère que la perméabilité magnétique du circuit magnétique est très supérieure à celle des entrefers, les entrefers sont donc prépondérants dans la valeur des réluctances.
- En position basse de l'élément mobile (au maximum du déplacement relatif), on considère par exemple que le deuxième entrefer E2 est égal à la moitié du premier entrefer (E2=1/2xE1). Dans cette position, 2/3 du flux magnétique total Fm_T passe par la deuxième partie du circuit magnétique, via le deuxième entrefer E2 et 1/3 du flux magnétique total Fm_T passe par la première partie du circuit magnétique, via le premier entrefer E1.
- En position haute (au maximum du déplacement relatif), on considère par exemple que le deuxième entrefer E2 est égal à 1.5 fois le premier entrefer (E2 =3/2xE1). Dans cette position 2/5 du flux magnétique total Fm_T passe par la deuxième partie circuit magnétique via le deuxième entrefer E2 et 3/5 du flux magnétique total passe par la première partie du circuit magnétique, via le premier entrefer E1.
- Entre les positions basse et haute, la bobine 50 voit une variation de flux allant de 2/3 à 2/5 du flux magnétique total Fm_T.

A titre d'exemple, si on considère que le flux magnétique total Fm_T produit un champ magnétique de 1T, au niveau du deuxième entrefer E2 en position basse, le champ magnétique qui passe dans la deuxième partie du circuit magnétique va varier alors de 0.6 à 1T et le champ magnétique qui passe dans la première partie du circuit magnétique va varier de 0.5T à 0.9T. La bobine 50 verra une variation de 0.4T.

Par ailleurs, il est possible de déterminer l'énergie magnétique que le dispositif peut générer ainsi que la section d'entrefer nécessaire pour générer cette énergie magnétique. Pour cela, on peut tenir compte des données suivantes :
- Une masse sismique m=20g ;
- Une fréquence de vibration de F=50Hz ;
- Le deuxième entrefer E2 situé au 2/3 du centre de gravité de la masse sismique ;
- Une vibration d'accélération maximale de A=0,2 m/s² et une amplification mécanique maximale de 100 ;
- Un déplacement en bout de poutre maximal qui est de 203µm et au niveau du deuxième entrefer qui est de 135µm dans un sens ou dans l'autre ;
- Le deuxième entrefer au repos par exemple égal à deux fois ce déplacement, soit 270µm ;
- Avec un couplage k² effectif souhaité de 0,6, une énergie mécanique de déformation maximale qui vaut alors E_{méca-max}=ke*x²=1608*(135µm)²=29,3µJ.
- Avec une perte de 0,2 de couplage due aux pertes cuivre, une variation d'énergie magnétique requise qui est de (0,6+0,2)*E_{méca-max}=0,8*29,3pJ=23,5µJ ;
- De l'entrefer minimal à l'entrefer maximal, alors il faut, durant cette variation, transformer le double de cette énergie, soit 47µJ.
- L'énergie magnétique dans chacun des entrefers vaut E_{mag}=B²/(2µ0)*V_{entrefer} avec V_{entrefer} le volume de l'entrefer ;
- Une section d'entrefer déterminée de 0.73 mm² ;

La solution de l'invention présente ainsi de nombreux avantages, parmi lesquels :
- Elle permet d'obtenir une variation de flux importante dans la bobine, à partir d'un mouvement vibratoire de relativement faible amplitude ;
- Elle permet d'utiliser le dispositif dans des systèmes à encombrement limité ;
- Elle reste d'un design relativement simple, utilisant des moyens couramment employés dans le domaine électromagnétique ;
- Elle peut être réalisée selon différentes variantes de réalisation, tout en gardant un principe de fonctionnement toujours identique ;
- Elle permet d'employer des aimants dont les caractéristiques dimensionnelles ne sont pas essentielles, diminuant leur coût.

## Revendications

1. Dispositif électromagnétique de conversion d'une énergie mécanique d'entrée en une énergie électrique de sortie, comprenant :
- Un élément mobile (100) apte à se déplacer dans un mouvement mécanique vibratoire,
- Une source de vibration configurée pour actionner l'élément mobile dans son mouvement mécanique vibratoire,
- Une bobine (50),
- Un circuit magnétique traversant ladite bobine (50), ladite bobine étant configurée pour générer l'énergie électrique de sortie lorsque ledit élément mobile (100) est actionné dans son mouvement mécanique vibratoire,
- Un aimant permanent (40) agencé dans le circuit magnétique et apte à générer un flux magnétique dit total (Fm_T) dans le circuit magnétique,
- Le circuit magnétique comportant un premier entrefer (E1) et un deuxième entrefer (E2),
- **Caractérisé en ce que** :
- Ledit premier entrefer (E1) est sensiblement fixe et ledit deuxième entrefer (E2) est variable en fonction de la position prise par l'élément mobile dans son mouvement mécanique vibratoire,
- L'aimant permanent (40) est agencé dans le circuit magnétique pour que le flux magnétique total (Fm_T) se sépare en un premier flux magnétique (Fm_1) à travers une première partie du circuit magnétique comprenant l'entrefer fixe et en un deuxième flux magnétique (Fm_2) à travers une deuxième partie du circuit magnétique comprenant l'entrefer variable,
- La bobine (50) est traversée par une seule partie du circuit magnétique, choisie parmi la première partie du circuit magnétique et la deuxième partie du circuit magnétique, et **en ce que**
- Le rapport entre le premier flux magnétique et le deuxième flux magnétique varie en fonction de la position prise par l'élément mobile (100).

2. Dispositif selon la revendication 1, **caractérisé en ce que** l'élément mobile (100) comporte au moins une première branche (10) intégrée au circuit magnétique.

3. Dispositif selon la revendication 2, **caractérisé en ce que** le circuit magnétique comporte une deuxième branche (20) et **en ce que** le dispositif comporte une liaison (30) joignant la première branche à la deuxième branche.

4. Dispositif selon la revendication 3, **caractérisé en ce que** la liaison est insérée dans le circuit magnétique et **en ce que** le premier entrefer (E1) est intégré dans ladite liaison.

5. Dispositif selon la revendication 4, **caractérisé en ce que** le premier entrefer (E1) est agencé dans une branche de jonction joignant ladite première branche (10) à ladite deuxième branche (20), agencée en parallèle de ladite liaison.

6. Dispositif selon l'une des revendications 3 à 5, **caractérisé en ce que** la liaison (30) est une liaison ressort apte à autoriser le mouvement mécanique vibratoire de l'élément mobile (100).

7. Dispositif selon l'une des revendications 3 à 6, **caractérisé en ce que** ladite liaison (30) est une liaison rigide et **en ce que** la première branche et/ou la deuxième branche est configurée pour fléchir en vue d'autoriser le mouvement mécanique vibratoire.

8. Dispositif selon l'une des revendications 3 à 7, **caractérisé en ce que** ladite première branche (10) se présente sous la forme d'une poutre fixée à ladite liaison par une première partie d'extrémité et qui comporte une deuxième partie d'extrémité opposée qui est libre.

9. Dispositif selon l'une des revendications 3 à 7, **caractérisé en ce que** le circuit magnétique comporte un troisième entrefer (E3) qui est variable et **en ce que** ledit élément mobile (100) est agencé pour osciller entre ledit deuxième entrefer (E2) et ledit troisième entrefer (E3).

10. Dispositif selon l'une des revendications 3 à 7, **caractérisé en ce que** ladite première branche (10) est maintenue en appui par une première partie d'extrémité contre une partie en matériau non ferromagnétique formant le premier entrefer (E1), par au moins un ressort (90) monté entre la première branche (10) et la deuxième branche (20).

11. Dispositif selon la revendication 3, **caractérisé en ce que** la première branche (10) est formée d'une membrane déformable, et **en ce que** la liaison (30) comporte une partie annulaire formant une liaison avec la deuxième branche (20).

12. Dispositif selon l'une des revendications 3 à 11, **caractérisé en ce qu'**il comporte une masse sismique (60) portée par l'élément mobile (100).

13. Dispositif selon la revendication 12, **caractérisé en ce que** la masse sismique (60) est réalisée dans un matériau ferromagnétique et **en ce que** le deuxième entrefer (E2) est agencé entre ladite masse sismique et la deuxième branche du circuit magnétique.

14. Dispositif selon la revendication 12 ou 13, **caractérisé en ce que** la source de vibration comporte un support vibrant (70) auquel ladite deuxième branche est reliée par un point de fixation.

15. Dispositif selon la revendication 14, **caractérisé en ce que** le point de fixation est positionné suivant un axe passant par le centre de gravité de la masse sismique (60) lorsque l'élément mobile est au repos.

16. Dispositif selon l'une des revendications 3 à 12, **caractérisé en ce que** la bobine (50) est positionnée autour de la première branche (10) du circuit magnétique.

17. Dispositif selon l'une des revendications 3 à 12, **caractérisé en ce que** la bobine (50) est positionnée autour de la deuxième branche (20) du circuit magnétique.

## Patentansprüche

1. Elektromagnetische Vorrichtung zur Umwandlung einer mechanischen Eingangsenergie in eine elektrische Ausgangsenergie, umfassend:
- Ein bewegliches Element (100), das in der Lage ist, sich in einer mechanischen Schwingungsbewegung zu bewegen,
- Eine Schwingungsquelle, die dazu ausgelegt ist, das bewegliche Element in seine mechanische Schwingungsbewegung zu versetzen,
- Eine Spule (50),
- Einen Magnetkreis, der die Spule (50) durchquert, wobei die Spule dazu ausgelegt ist, die elektrische Ausgangsenergie zu erzeugen, wenn das bewegliche Element (100) in seine mechanische Schwingungsbewegung versetzt wird;
- Einen Permanentmagneten (40), der in dem Magnetkreis angeordnet ist und in der Lage ist, einen sogenannten Gesamtmagnetfluss (Fm_T) in dem Magnetkreis zu erzeugen,
- Wobei der Magnetkreis einen ersten Luftspalt (E1) und einen zweiten Luftspalt (E2) aufweist,
- **Dadurch gekennzeichnet, dass**:
- Der erste Luftspalt (E1) im Wesentlichen gleichbleibend ist und der zweite Luftspalt (E2) in Abhängigkeit von der Position, die das bewegliche Element in seiner mechanischen Schwingungsbewegung einnimmt, variabel ist;
- Der Permanentmagnet (40) ist in dem Magnetkreis so angeordnet ist, dass sich der Gesamtmagnetfluss (Fm_T) in einen ersten Magnetfluss (Fm_1) durch einen ersten Teil des Magnetkreises hindurch, der den gleichbleibenden Luftspalt umfasst, und in einen zweiten Magnetfluss (Fm_2) durch einen zweiten Teil des Magnetkreises hindurch, der den variablen Luftspalt umfasst, teilt,
- Die Spule (50) von einem einzigen Teil des Magnetkreises durchquert wird, der aus dem ersten Teil des Magnetkreises und dem zweiten Teil des Magnetkreises ausgewählt ist, und dadurch, dass
- Das Verhältnis zwischen dem ersten Magnetfluss und dem zweiten Magnetfluss in Abhängigkeit von der von dem beweglichen Element (100) eingenommenen Position variiert.

2. Vorrichtung nach Anspruch 1, **dadurch gekennzeichnet, dass** das bewegliche Element (100) mindestens einen ersten Schenkel (10) aufweist, der in den Magnetkreis integriert ist.

3. Vorrichtung nach Anspruch 2, **dadurch gekennzeichnet, dass** der Magnetkreis einen zweiten Schenkel (20) aufweist und dass die Vorrichtung eine Verbindung (30) aufweist, die den ersten Schenkel an den zweiten Schenkel anfügt.

4. Vorrichtung nach Anspruch 3, **dadurch gekennzeichnet, dass** die Verbindung in den Magnetkreis eingefügt ist und dass der erste Luftspalt (E1) in die Verbindung integriert ist.

5. Vorrichtung nach Anspruch 4, **dadurch gekennzeichnet, dass** der erste Luftspalt (E1) in einem Übergangsschenkel angeordnet ist, der den ersten Schenkel (10) an den zweiten Schenkel (20) anfügt und parallel zu dieser Verbindung angeordnet ist.

6. Vorrichtung nach einem der Ansprüche 3 bis 5, **dadurch gekennzeichnet, dass** die Verbindung (30) eine Federverbindung ist, die in der Lage ist, die mechanische Schwingungsbewegung des beweglichen Elements (100) zuzulassen.

7. Vorrichtung nach einem der Ansprüche 3 bis 6, **dadurch gekennzeichnet, dass** diese Verbindung (30) eine starre Verbindung ist und dass der erste und/oder der zweite Schenkel dazu ausgelegt ist, sich zu biegen, um die mechanische Schwingungsbewegung zuzulassen.

8. Vorrichtung nach einem der Ansprüche 3 bis 7, **dadurch gekennzeichnet, dass** der erste Schenkel (10) in Form eines Balkens vorliegt, der an dieser Verbindung durch einen ersten Endteil befestigt ist und der einen entgegengesetzten zweiten Endteil aufweist, der frei ist.

9. Vorrichtung nach einem der Ansprüche 3 bis 7, **dadurch gekennzeichnet, dass** der Magnetkreis einen dritten Luftspalt (E3) aufweist, der variabel ist, und dass das bewegliche Element (100) so angeordnet ist, dass es zwischen dem zweiten Luftspalt (E2) und dem dritten Luftspalt (E3) oszilliert.

10. Vorrichtung nach einem der Ansprüche 3 bis 7, **dadurch gekennzeichnet, dass** der erste Schenkel (10) durch einen ersten Endteil gegen einen Teil aus nicht ferromagnetischem Material, der den ersten Luftspalt (E1) bildet, durch mindestens eine Feder (90) abgestützt gehalten wird, die zwischen dem ersten Schenkel (10) und dem zweiten Schenkel (20) montiert ist.

11. Vorrichtung nach Anspruch 3, **dadurch gekennzeichnet, dass** der erste Schenkel (10) aus einer verformbaren Membran gebildet wird und dass die Verbindung (30) einen ringförmigen Teil aufweist, der eine Verbindung mit dem zweiten Schenkel (20) bildet.

12. Vorrichtung nach einem der Ansprüche 3 bis 11, **dadurch gekennzeichnet, dass** sie eine seismische Masse (60) aufweist, die von dem beweglichen Element (100) getragen wird.

13. Vorrichtung nach Anspruch 12, **dadurch gekennzeichnet, dass** die seismische Masse (60) aus einem ferromagnetischen Material ausgeführt ist und dass der zweite Luftspalt (E2) zwischen der seismischen Masse und dem zweiten Schenkel des Magnetkreises angeordnet ist.

14. Vorrichtung nach Anspruch 12 oder 13, **dadurch gekennzeichnet, dass** die Schwingungsquelle einen schwingenden Träger (70) aufweist, mit dem der zweite Schenkel durch einen Befestigungspunkt verbunden ist.

15. Vorrichtung nach Anspruch 14, **dadurch gekennzeichnet, dass** der Befestigungspunkt entlang einer Achse positioniert ist, die durch den Schwerpunkt der seismischen Masse (60) verläuft, wenn das bewegliche Element in Ruhe ist.

16. Vorrichtung nach einem der Ansprüche 3 bis 12, **dadurch gekennzeichnet, dass** die Spule (50) um den ersten Schenkel (10) des Magnetkreises positioniert ist.

17. Vorrichtung nach einem der Ansprüche 3 bis 12, **dadurch gekennzeichnet, dass** die Spule (50) um den zweiten Schenkel (20) des Magnetkreises positioniert ist.

## Claims

1. Electromagnetic device for converting input mechanical energy into output electrical energy, comprising:
- a movable element (100) that is able to make a vibratory mechanical movement,
- a vibration source configured to actuate the vibratory mechanical movement of the movable element,
- a coil (50),
- a magnetic circuit passing through said coil (50), said coil being configured to generate the output electrical energy when said movable element (100) is making its vibratory mechanical movement,
- a permanent magnet (40) arranged in the magnetic circuit and able to generate a magnetic flux, referred to as the total magnetic flux (Fm_T), in the magnetic circuit,
- the magnetic circuit comprising a first gap (E1) and a second gap (E2),
- **characterized in that**:
- said first gap (E1) remains substantially constant and said second gap (E2) is variable as a function of the position taken by the movable element during its vibratory mechanical movement,
- the permanent magnet (40) is arranged in the magnetic circuit so that the total magnetic flux (Fm_T) is split into a first magnetic flux (Fm_1) through a first portion of the magnetic circuit comprising the constant gap and a second magnetic flux (Fm_2) through a second portion of the magnetic circuit comprising the variable gap,
- the coil (50) is passed through by a single portion of the magnetic circuit, which portion is chosen from the first portion of the magnetic circuit and the second portion of the magnetic circuit, and **in that**
- the ratio between the first magnetic flux and the second magnetic flux varies as a function of the position of the movable element (100).

2. Device according to Claim 1, **characterized in that** the movable element (100) comprises at least one first leg (10) integrated into the magnetic circuit.

3. Device according to Claim 2, **characterized in that** the magnetic circuit comprises a second leg (20) and **in that** the device comprises a link (30) joining the first leg to the second leg.

4. Device according to Claim 3, **characterized in that** the link is inserted in the magnetic circuit and **in that** the first gap (E1) is integrated into said link.

5. Device according to Claim 4, **characterized in that** the first gap (E1) is arranged in a junction leg joining said first leg (10) to said second leg (20), which leg is arranged parallel to said link.

6. Device according to one of Claims 3 to 5, **characterized in that** the link (30) is a spring link apt to permit the vibratory mechanical movement of the movable element (100).

7. Device according to one of Claims 3 to 6, **characterized in that** said link (30) is a stiff link and **in that** the first leg and/or the second leg is configured to flex with a view to permitting the vibratory mechanical movement.

8. Device according to one of Claims 3 to 7, **characterized in that** said first leg (10) takes the form of a beam fastened to said link by a first end portion and that comprises a second end portion opposite that is free.

9. Device according to one of Claims 3 to 7, **characterized in that** the magnetic circuit comprises a third gap (E3) that is variable and **in that** said movable element (100) is arranged to oscillate between said second gap (E2) and said third gap (E3).

10. Device according to one of Claims 3 to 7, **characterized in that** a first end portion of said first leg (10) is held in abutment, against a portion made of non-ferromagnetic material forming the first gap (E1), by at least one spring (90) mounted between the first leg (10) and the second leg (20).

11. Device according to Claim 3, **characterized in that** the first leg (10) is formed from a deformable membrane, and **in that** the link (30) comprises an annular portion forming a link with the second leg (20).

12. Device according to one of Claims 3 to 11, **characterized in that** it comprises a seismic mass (60) borne by the movable element (100).

13. Device according to Claim 12, **characterized in that** the seismic mass (60) is made of a ferromagnetic material and **in that** the second gap (E2) is arranged between said seismic mass and the second leg of the magnetic circuit.

14. Device according to Claim 12 or 13, **characterized in that** the vibration source comprises a vibrating carrier (70) to which said second leg is connected at a fastening point.

15. Device according to Claim 14, **characterized in that** the fastening point is positioned along an axis passing through the centre of gravity of the seismic mass (60) when the movable element is at rest.

16. Device according to one of Claims 3 to 12, **characterized in that** the coil (50) is positioned around the first leg (10) of the magnetic circuit.

17. Device according to one of Claims 3 to 12, **characterized in that** the coil (50) is positioned around the second leg (20) of the magnetic circuit.
